# EUROPÄISCHE PATENTSCHRIFT

(11) **EP 3 739 519 B1**
(45) Veröffentlichungstag und Bekanntmachung des Hinweises auf die Patenterteilung: **16.02.2022**
(21) Anmeldenummer: 20163229.6
(22) Anmeldetag: 16.03.2020
(51) Int. Cl.: G06K 19/077, B29D 30/00, B60C 9/18

(54) **REIFEN**
TYRE
PNEUMATIQUE

(30) Priorität: 15.05.2019 DE 102019207022
(43) Veröffentlichungstag der Anmeldung: 18.11.2020
(73) Patentinhaber: Continental Reifen Deutschland GmbH, 30165 Hannover (DE)
(72) Erfinder: Belobrad, Juraj, 30419 Hannover (DE); Mosko, Martin, 30419 Hannover (DE); Ehmke, Tobias, 30419 Hannover (DE); Lerner, Christian, 30419 Hannover (DE)
(74) Vertreter: Continental Corporation

(56) Entgegenhaltungen:
- EP-B1- 2 223 814
- US-A- 4 911 217

## Beschreibung

### Reifen

Die Erfindung bezieht sich auf einen Reifen.

Die Erfindung geht aus von einem Reifen, wobei der Reifen um eine Rotationsachse in eine Umlaufrichtung rotierbar ist. Der Reifen weist ein Reifengürtelpaket und ein Schulterpolster auf. Das Schulterpolster ist in einem Schulterbereich des Reifens angeordnet. Der Reifen weist ferner eine elektromagnetische Sende- und Empfangsvorrichtung auf.

Bei der elektromagnetischen Sende- und Empfangsvorrichtung handelt es sich insbesondere um eine RFID-Vorrichtung. RFID steht für Radio Frequency Identification und bedeutet Identifizierung mit Hilfe elektromagnetischer Wellen.

Aus dem Stand der Technik sind Reifen bekannt die elektromagnetische Sende- und Empfangsvorrichtungen aufweisen. Beispielsweise wird in der EP2223814B1 sowie in der US4911217A eine elektromagnetische Sende- und Empfangsvorrichtung für einen Reifen offenbart.

Bei den aus dem Stand der Technik bekannten Reifen könnte eine Anordnung einer elektromagnetischen Sende- und Empfangsvorrichtung innerhalb des Reifens nicht optimal ausgestaltet sein. So könnte die elektromagnetische Sende- und Empfangsvorrichtung in einem solchen Bereich des Reifens angeordnet sein, in dem sie höheren mechanischen Belastungen ausgesetzt sein könnte als in anderen Bereichen des Reifens.

Der Erfindung liegt daher die Aufgabe zugrunde einen Reifen bereitzustellen, bei dem die Anordnung der elektromagnetischen Sende- und Empfangsvorrichtung innerhalb des Reifens verbessert wird.

Gelöst wird die erfindungsgemäße Aufgabe durch die Merkmale des kennzeichnenden Teils des Anspruchs 1.

Gemäß der Erfindung wird die elektromagnetische Sende- und Empfangsvorrichtung derart in dem Schulterbereich angeordnet ist, dass sie einen maximalen Abstand von höchstens 2 mm zu dem Schulterpolster aufweist.

Durch den erfindungsgemäßen Umstand, wonach die elektromagnetische Sende- und Empfangsvorrichtung derart in dem Schulterbereich angeordnet ist, dass sie einen maximalen Abstand von höchstens 2 mm zu dem Schulterpolster aufweist, wird die elektromagnetische Sende- und Empfangsvorrichtung in einem solchen Bereich des Reifens angeordnet, in dem sie in einer ausreichenden räumlichen Nähe zu dem Schulterpolster des Reifens angeordnet ist. Durch diese Nähe zu dem Schulterpolster kann die elektromagnetische Sende- und Empfangsvorrichtung vor mechanischen Belastungen besser geschützt werden, als es in anderen Bereichen des Reifens der Fall wäre.

Somit wird ein verbesserter Reifen bereitgestellt.

Bei dem Reifen handelt es sich insbesondere um einen Lkw-Reifen, um einen Pkw-Reifen oder um einen Fahrrad-Reifen oder um einen Motorrad-Reifen.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung ist die elektromagnetische Sende- und Empfangsvorrichtung derart in dem Schulterbereich angeordnet, dass sie einen maximalen Abstand von höchstens 0,1 mm bis höchstens 2 mm zu dem Schulterpolster aufweist.

Gemäß einer nächsten vorzugsweisen Ausgestaltungsform der vorliegenden Erfindung ist die elektromagnetische Sende- und Empfangsvorrichtung derart in dem Schulterbereich angeordnet, dass sie in einem direkten Kontakt mit dem Schulterpolster steht.

Durch den erfindungsgemäßen Umstand, wonach die elektromagnetische Sende- und Empfangsvorrichtung derart in dem Schulterbereich angeordnet ist, dass sie in einem direkten Kontakt mit dem Schulterpolster steht, wird eine Positionierung der elektromagnetischen Sende- und Empfangsvorrichtung erreicht, die zu einem verbesserten Sende- und Empfangsverhalten der elektromagnetischen Sende- und Empfangsvorrichtung führt. Hintergrund dieses verbesserten Sende- und Empfangsverhaltens ist, dass ein Abstand der elektromagnetischen Sende- und Empfangsvorrichtung zu einer Felge, auf der ein Reifen montiert ist, in dem die elektromagnetische Sende- und Empfangsvorrichtung angeorndet ist, größer ist, als der Abstand der elektromagnetischen Sende- und Empfangsvorrichtung zu der Felge, wenn die elektromagnetische Sende- und Empfangsvorrichtung beispielsweise in einem Wulstbereich des Reifens angeordnet wäre.

Gemäß einer nächsten vorzugsweisen Ausgestaltungsform der vorliegenden Erfindung ist die elektromagnetische Sende- und Empfangsvorrichtung vollständig innerhalb des Schulterpolsters angeordnet.

Durch den erfindungsgemäßen Umstand, wonach die elektromagnetische Sende- und Empfangsvorrichtung vollständig innerhalb des Schulterpolsters angeordnet ist, wird eine robuste Positionierung der elektromagnetischen Sende- und Empfangsvorrichtung erreicht.

Gemäß der vorliegenden Erfindung weist der Reifen ein Seitenwandbauteil auf, wobei das Seitenwandbauteil neben dem Schulterpolster angeordnet ist und wobei die elektromagnetische Sende- und Empfangsvorrichtung räumlich zwischen dem Schulterpolster und dem Seitenwandbauteil angeordnet ist.

Durch den erfindungsgemäßen Umstand, wonach der Reifen ein Seitenwandbauteil aufweist, wobei das Seitenwandbauteil neben dem Schulterpolster angeordnet ist und wobei die elektromagnetische Sende- und Empfangsvorrichtung räumlich zwischen dem Schulterpolster und dem Seitenwandbauteil angeordnet ist, wird eine Positionierung der elektromagnetischen Sende- und Empfangsvorrichtung erreicht, die zu einem verbesserten Sende- und Empfangsverhalten der elektromagnetischen Sende- und Empfangsvorrichtung führt. Hintergrund dieses verbesserten Sende- und Empfangsverhaltens ist der optimale Abstand der elektromagnetischen Sende- und Empfangsvorrichtung zu einer Felge, auf der ein Reifen montiert ist, in dem die elektromagnetische Sende- und Empfangsvorrichtung angeordnet ist.

Gemäß einer nächsten vorzugsweisen Ausgestaltungsform der vorliegenden Erfindung weist der Reifen einen Laufstreifen auf, wobei der Laufstreifen neben dem Schulterpolster angeordnet ist und wobei die elektromagnetische Sende- und Empfangsvorrichtung räumlich zwischen dem Schulterpolster und dem Laufstreifen angeordnet ist.

Durch den erfindungsgemäßen Umstand, wonach der Reifen einen Laufstreifen aufweist, wobei der Laufstreifen neben dem Schulterpolster angeordnet ist und wobei die elektromagnetische Sende- und Empfangsvorrichtung räumlich zwischen dem Schulterpolster und dem Laufstreifen angeordnet ist, wird eine robuste Positionierung der elektromagnetischen Sende- und Empfangsvorrichtung erreicht.

Gemäß einer nächsten vorzugsweisen Ausgestaltungsform der vorliegenden Erfindung weist das Reifengürtelpaket einen axialen Endpunkt auf, wobei der axiale Endpunkt ausgehend von einer Reifenmittenebene in eine Richtung, wobei die Richtung parallel zu der Rotationsachse liegt, der am weitesten von der Reifenmittenebene entfernt liegende Punkt des Reifengürtelpakets ist, und wobei das Schulterpolster einen ersten Oberflächenpunkt aufweist der von allen Oberflächenpunkten des Schulterpolsters in einer radialen Richtung der Rotationsachse am nächsten liegt, wobei ein radialer Abstand eines ersten Oberflächenpunktes der elektromagnetischen Sende- und Empfangsvorrichtung, der zur Rotationsachse in radialer Richtung nächstgelegen ist, zu der Rotationsachse mindestens 3 mm größer ist als ein radialer Abstand des ersten Oberflächenpunktes des Schulterpolsters zur Rotationsachse, und, dass ein radialer Abstand des axialen Endpunktes zu der Rotationsachse mindestens 3 mm größer ist, als der radiale Abstand des ersten Oberflächenpunktes der elektromagnetischen Sende- und Empfangsvorrichtung zu der Rotationsachse.

Durch den erfindungsgemäßen Umstand, wonach das Reifengürtelpaket einen axialen Endpunkt aufweist, wobei der axiale Endpunkt ausgehend von einer Reifenmittenebene in eine Richtung, wobei die Richtung parallel zu der Rotationsachse liegt, der am weitesten von der Reifenmittenebene entfernt liegende Punkt des Reifengürtelpakets ist, und wobei das Schulterpolster einen ersten Oberflächenpunkt aufweist der von allen Oberflächenpunkten des Schulterpolsters in einer radialen Richtung der Rotationsachse am nächsten liegt, wobei ein radialer Abstand eines ersten Oberflächenpunktes der elektromagnetischen Sende- und Empfangsvorrichtung, der zur Rotationsachse in radialer Richtung nächstgelegen ist, zu der Rotationsachse mindestens 3 mm größer ist als ein radialer Abstand des ersten Oberflächenpunktes des Schulterpolsters zur Rotationsachse, und, dass ein radialer Abstand des axialen Endpunktes des Reifengürtelpakets zu der Rotationsachse mindestens 3 mm größer ist, als der radiale Abstand des ersten Oberflächenpunktes der elektromagnetischen Sende- und Empfangsvorrichtung zu der Rotationsachse, werden mechanische Belastungen an einer Kante des Reifengürtelpakets und am Ende des Schulterpolsters vermieden.

Der Reifen folgt grundsätzlich einer Form eines Kreises. Ein radialer Abstand oder eine radiale Richtung erstrecken sich parallel zu einem Radius des Kreises dessen Form der Reifen grundsätzlich folgt. Der Radius liegt rechtwinklig zur Rotationsachse und zur Umlaufrichtung. Ein radialer Abstand ist stets ein Abstand bis zur Rotationsachse.

Gemäß einer nächsten vorzugsweisen Ausgestaltungsform der vorliegenden Erfindung weist die elektromagnetische Sende- und Empfangsvorrichtung eine Gummiummantelung auf. Dabei ist die Gummiummantelung insbesondere Bestandteil der elektromagnetischen Sende- und Empfangsvorrichtung.

Innerhalb der Gummiummantelung sind elektronische und elektrische Komponenten der elektromagnetischen Sende- und Empfangsvorrichtung angeordnet. Der erste Oberflächenpunkt der elektromagnetischen Sende- und Empfangsvorrichtung liegt dann auf der Oberfläche der Gummiummantelung. Die Oberfläche der Gummiummantelung ist eine von der elektromagnetischen Sende- und Empfangsvorrichtung weg orientierte Außenfläche. Die Gummiummantelung ist insbesondere quaderförmig oder ellipsoid ausgebildet, wobei insbesondere eine maximale Dicke der elektromagnetischen Sende- und Empfangsvorrichtung von 2 mm, eine dazu rechtwinklig sich erstreckende maximale Länge der elektromagnetischen Sende- und Empfangsvorrichtung von 80 mm und eine sich zu Dicke und Länge rechtwinklig sich erstreckende maximale Breite der elektromagnetischen Sende- und Empfangsvorrichtung von 20 mm nicht überschritten wird. Die elektronischen und elektrischen Komponenten der elektromagnetischen Sende- und Empfangsvorrichtung weisen insbesondere zusammen eine maximale räumliche Erstreckung von höchstens 70 mm auf. Die Antenne oder die Antennen der elektromagnetischen Sende- und Empfangsvorrichtung weist beziehungsweise weisen insbesondere für den Fall, wonach die Antenne beziehungsweise die Antennen einer Helixform folgt beziehungsweise folgen, einen Außendurchmesser von höchstens 2 mm auf.

Die elektromagnetische Sende- und Empfangsvorrichtung weist gemäß einer vorteilhaften Ausführungsform der Erfindung insbesondere eine separate Gummiummantelung auf.

Die elektromagnetische Sende- und Empfangsvorrichtung weist gemäß einer vorteilhaften Ausführungsform der Erfindung insbesondere eine oder zwei Antennen auf. Die Antenne beziehungsweise die zwei Antennen sind insbesondere helixförmig.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Reifens gemäß einer Ausführungsform in Radialschnittansicht;
Fig. 2: Eine schematische Darstellung eines erfindungsgemäßen Reifens gemäß einer weiteren Ausführungsform in Radialschnittansicht;
Fig. 3: Eine schematische Darstellung eines erfindungsgemäßen Reifens gemäß einer weiteren Ausführungsform in Radialschnittansicht.

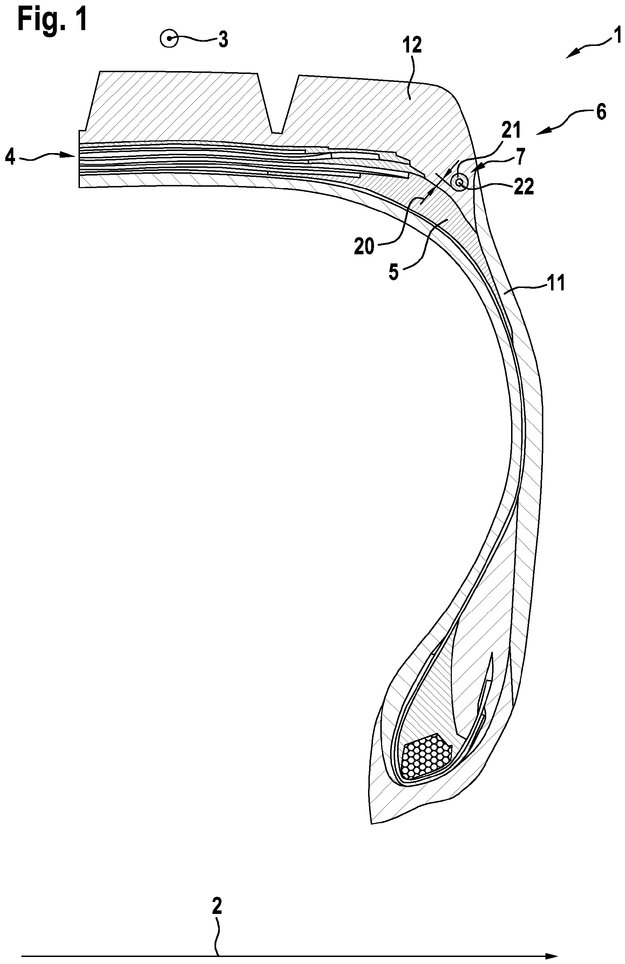

In der Figur 1 ist ein erfindungsgemäßer Reifen 1 schematisch in Radialschnittansicht dargestellt. Der Reifen 1 ist um eine Rotationsachse 2 in eine Umlaufrichtung 3 rotierbar. Reifen 1 weist ein Reifengürtelpaket 4 und ein Schulterpolster 5 auf, wobei das Schulterpolster 5 in einem Schulterbereich 6 des Reifens 1 angeordnet ist. Der Reifen 1 weist weiter eine elektromagnetische Sende- und Empfangsvorrichtung 7 auf.

Die elektromagnetische Sende- und Empfangsvorrichtung 7 ist derart in dem Schulterbereich 6 angeordnet, dass sie einen maximalen Abstand 20 von höchstens 2 mm zu dem Schulterpolster 5 aufweist.

Insbesondere ist die elektromagnetische Sende- und Empfangsvorrichtung 7 derart in dem Schulterbereich 6 angeordnet, dass sie einen maximalen Abstand 20 von höchstens 0,1 mm bis höchstens 2 mm zu dem Schulterpolster 5 aufweist.

Gemäß der in der Figur 1 dargestellten Ausführungsform des erfindungsgemäßen Reifens 1 weist die elektromagnetische Sende- und Empfangsvorrichtung 7 eine Gummiummantelung 21 auf. Die Gummiummantelung 21 ist insbesondere Bestandteil der elektromagnetischen Sende- und Empfangsvorrichtung 7. Innerhalb der Gummiummantelung 21 sind elektrische und elektronische Bestandteile 22 der elektromagnetischen Sende- und Empfangsvorrichtung 7 angeordnet. Die elektrischen und elektronischen Bestandteile 22 und die Gummiummantelung 21 bilden die elektromagnetische Sende- und Empfangsvorrichtung 7.

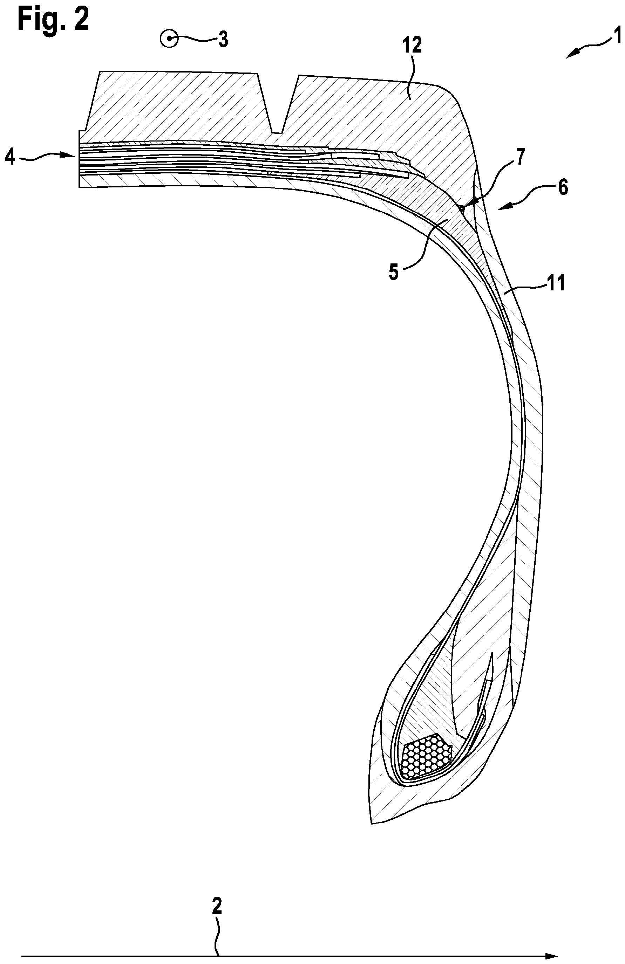

In der Figur 2 ist ein erfindungsgemäßer Reifen 1 gemäß einer Ausführungsform schematisch in Radialschnittansicht dargestellt. Gemäß der in der Figur 2 dargestellten Ausführungsform ist die elektromagnetische Sende- und Empfangsvorrichtung 7 derart in dem Schulterbereich 6 angeordnet, dass sie in einem direkten Kontakt mit dem Schulterpolster 5 steht.

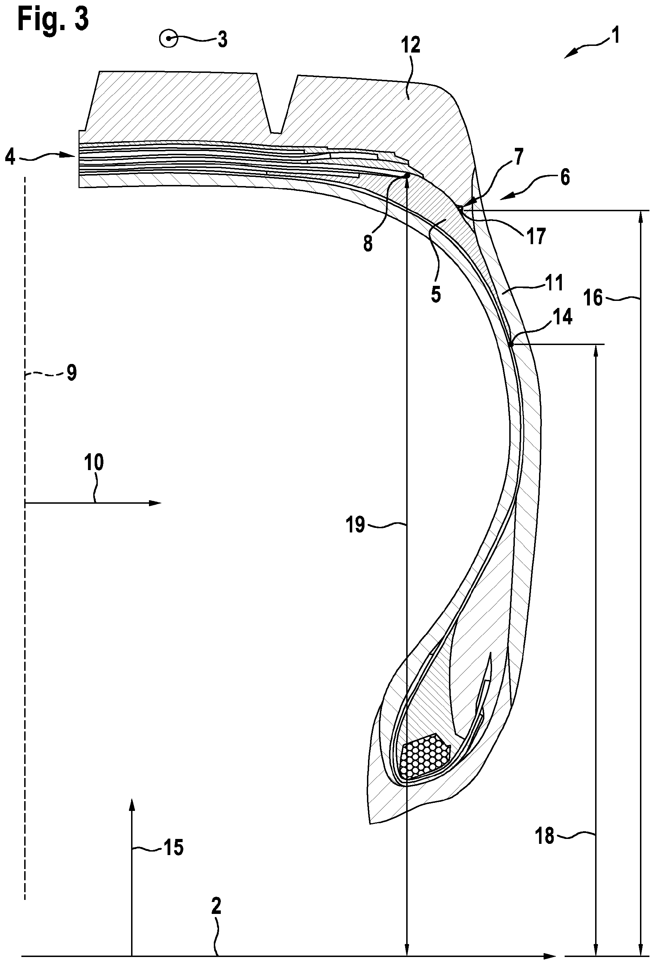

In der Figur 3 ist ein erfindungsgemäßer Reifen 1 gemäß einer Ausführungsform schematisch in Radialschnittansicht dargestellt. Gemäß der in der Figur 3 dargestellten Ausführungsform weist das Reifengürtelpaket 4 einen axialen Endpunkt 8 auf. Der axiale Endpunkt 8 ist ausgehend von einer Reifenmittenebene 9 in eine Richtung 10, wobei die Richtung 10 parallel zu der Rotationsachse 2 liegt, der am weitesten von der Reifenmittenebene 9 entfernt liegende Punkt des Reifengürtelpakets 4. Die Reifenmittenebene 9 ist eine Symmetrieebene des Reifens 1. Die Rotationsachse 2 steht senkrecht zur Reifenmittenebene 9.

Das Schulterpolster 5 weist einen ersten Oberflächenpunkt 14 auf, der von allen Oberflächenpunkten des Schulterpolsters 5 in einer radialen Richtung 15 der Rotationsachse 2 am nächsten liegt. Ein radialer Abstand 16 eines ersten Oberflächenpunktes 17 der elektromagnetischen Sende- und Empfangsvorrichtung 7, der zur Rotationsachse 2 in radialer Richtung 15 nächstgelegen ist, zu der Rotationsachse 2 ist mindestens 3 mm größer als ein radialer Abstand 18 des ersten Oberflächenpunktes 14 des Schulterpolsters 5 zur Rotationsachse 2. Dazu ist ein radialer Abstand 19 des axialen Endpunktes 8 zu der Rotationsachse 2 mindestens 3 mm größer, als der radiale Abstand 16 des ersten Oberflächenpunktes 17 der elektromagnetischen Sende- und Empfangsvorrichtung 7 zu der Rotationsachse 2.

### Bezugszeichenliste

(ist Teil der Beschreibung)
- 1: Reifen
- 2: Rotationsachse
- 3: Umlaufrichtung
- 4: Reifengürtelpaket
- 5: Schulterpolster
- 6: Schulterbereich
- 7: Elektromagnetische Sende- und Empfangsvorrichtung
- 8: Axialer Endpunkt des Reifengürtelpakets
- 9: Reifenmittenebene
- 10: Richtung parallel zu der Rotationsachse
- 11: Seitenwandbauteil
- 12: Laufstreifen
- 13: (als Bezugszeichen nicht verwendet)
- 14: Erster Oberflächenpunkt des Schulterpolsters
- 15: Radiale Richtung
- 16: Radialer Abstand des ersten Oberflächenpunktes der elektromagnetischen Sendeund Empfangsvorrichtung zu der Rotationsachse
- 17: Erster Oberflächenpunkt der elektromagnetischen Sende- und Empfangsvorrichtung
- 18: Radialer Abstand des ersten Oberflächenpunktes des Schulterpolsters zur Rotationsachse
- 19: Radialer Abstand des axialen Endpunktes zu der Rotationsachse
- 20: Maximaler Abstand
- 21: Gummiummantelung
- 22: Elektrische und elektronische Bestandteile der elektromagnetischen Sende- und Empfangsvorrichtung

## Patentansprüche

1. Reifen (1), wobei der Reifen (1) um eine Rotationsachse (2) in eine Umlaufrichtung (3) rotierbar ist, aufweisend ein Reifengürtelpaket (4) und ein Schulterpolster (5), wobei das Schulterpolster (5) in einem Schulterbereich (6) des Reifens (1) angeordnet ist, und aufweisend eine elektromagnetische Sende- und Empfangsvorrichtung (7), wobei die elektromagnetische Sende- und Empfangsvorrichtung (7) derart in dem Schulterbereich (6) angeordnet ist, dass sie einen maximalen Abstand (20) von höchstens 2 mm zu dem Schulterpolster (5) aufweist, **dadurch gekennzeichnet, dass** der Reifen (1) ein Seitenwandbauteil (11) aufweist, wobei das Seitenwandbauteil (11) neben dem Schulterpolster (5) angeordnet ist und wobei die elektromagnetische Sende- und Empfangsvorrichtung (7) räumlich zwischen dem Schulterpolster (5) und dem Seitenwandbauteil (11) angeordnet ist.

2. Reifen (1) nach Anspruch 1, **dadurch gekennzeichnet, dass** die elektromagnetische Sende- und Empfangsvorrichtung (7) derart in dem Schulterbereich (6) angeordnet ist, dass sie einen maximalen Abstand (20) von höchstens 0,1 mm bis höchstens 2 mm zu dem Schulterpolster (5) aufweist.

3. Reifen (1) nach Anspruch 1, **dadurch gekennzeichnet, dass** die elektromagnetische Sende- und Empfangsvorrichtung (7) derart in dem Schulterbereich (6) angeordnet ist, dass sie in einem direkten Kontakt mit dem Schulterpolster (5) steht.

4. Reifen (1) nach Anspruch 1, **dadurch gekennzeichnet, dass** die elektromagnetische Sende- und Empfangsvorrichtung (7) vollständig innerhalb des Schulterpolsters (5) angeordnet ist.

5. Reifen (1) nach Anspruch 1, **dadurch gekennzeichnet, dass** der Reifen (1) einen Laufstreifen (12) aufweist, wobei der Laufstreifen (12) neben dem Schulterpolster (5) angeordnet ist und wobei die elektromagnetische Sende- und Empfangsvorrichtung (7) räumlich zwischen dem Schulterpolster (5) und dem Laufstreifen (12) angeordnet ist.

6. Reifen (1) nach einem der vorhergehenden Ansprüche, **dadurch gekennzeichnet, dass** das Reifengürtelpaket (4) einen axialen Endpunkt (8) aufweist, wobei der axiale Endpunkt (8) ausgehend von einer Reifenmittenebene (9) in eine Richtung (10), wobei die Richtung (10) parallel zu der Rotationsachse (2) liegt, der am weitesten von der Reifenmittenebene (9) entfernt liegende Punkt des Reifengürtelpakets (4) ist, und wobei das Schulterpolster (5) einen ersten Oberflächenpunkt (14) aufweist der von allen Oberflächenpunkten des Schulterpolsters (5) in einer radialen Richtung (15) der Rotationsachse (2) am nächsten liegt, wobei ein radialer Abstand (16) eines ersten Oberflächenpunktes (17) der elektromagnetischen Sende- und Empfangsvorrichtung (7), der zur Rotationsachse (2) in radialer Richtung (15) nächstgelegen ist, zu der Rotationsachse (2) mindestens 3 mm größer ist als ein radialer Abstand (18) des ersten Oberflächenpunktes (14) des Schulterpolsters (5) zur Rotationsachse (2), und, dass ein radialer Abstand (19) des axialen Endpunktes (8) zu der Rotationsachse (2) mindestens 3 mm größer ist, als der radiale Abstand (16) des ersten Oberflächenpunktes (17) der elektromagnetischen Sende- und Empfangsvorrichtung (7) zu der Rotationsachse (2).

7. Reifen (1) nach einem der vorhergehenden Ansprüche, **dadurch gekennzeichnet, dass** die elektromagnetische Sende- und Empfangsvorrichtung (7) eine Gummiummantelung (21) aufweist, wobei die Gummiummantelung (21) insbesondere Bestandteil der elektromagnetischen Sende- und Empfangsvorrichtung (7) ist.

## Claims

1. Tyre (1), wherein the tyre (1) is rotatable about an axis of rotation (2) in a direction of rotation (3), having a tyre belt package (4) and a shoulder pad (5), wherein the shoulder pad (5) is arranged in a shoulder region (6) of the tyre (1), and having an electromagnetic transmitting and receiving device (7), wherein the electromagnetic transmitting and receiving device (7) is arranged in the shoulder region (6) in such a way that it is at a maximum distance (20) from the shoulder pad (5) of at most 2 mm, **characterized in that** the tyre (1) has a sidewall component (11), wherein the sidewall component (11) is arranged next to the shoulder pad (5) and wherein the electromagnetic transmitting and receiving device (7) is spatially arranged between the shoulder pad (5) and the sidewall component (11).

2. Tyre (1) according to Claim 1, **characterized in that** the electromagnetic transmitting and receiving device (7) is arranged in the shoulder region (6) in such a way that it is at a maximum distance (20) from the shoulder pad (5) of at most 0.1 mm to at most 2 mm.

3. Tyre (1) according to Claim 1, **characterized in that** the electromagnetic transmitting and receiving device (7) is arranged in the shoulder region (6) in such a way that it is in direct contact with the shoulder pad (5).

4. Tyre (1) according to Claim 1, **characterized in that** the electromagnetic transmitting and receiving device (7) is arranged completely within the shoulder pad (5) .

5. Tyre (1) according to Claim 1, **characterized in that** the tyre (1) has a tread (12), wherein the tread (12) is arranged next to the shoulder pad (5) and wherein the electromagnetic transmitting and receiving device (7) is spatially arranged between the shoulder pad (5) and the tread (12).

6. Tyre (1) according to one of the preceding claims, **characterized in that** the tyre belt package (4) has an axial end point (8), wherein, taken from a tyre centre plane (9), the axial end point (8) is the point of the tyre belt package (4) lying furthest away from the tyre centre plane (9) in one direction (10), wherein the direction (10) lies parallel to the axis of rotation (2), and wherein the shoulder pad (5) has a first surface point (14), which of all the surface points of the shoulder pad (5) lies closest to the axis of rotation (2) in a radial direction (15), wherein a radial distance (16) of a first surface point (17) of the electromagnetic transmitting and receiving device (7) that is closest to the axis of rotation (2) in the radial direction (15) from the axis of rotation (2) is at least 3 mm greater than a radial distance (18) of the first surface point (14) of the shoulder pad (5) from the axis of rotation (2), and wherein a radial distance (19) of the axial end point (8) from the axis of rotation (2) is at least 3 mm greater than the radial distance (16) of the first surface point (17) of the electromagnetic transmitting and receiving device (7) from the axis of rotation (2).

7. Tyre (1) according to one of the preceding claims, **characterized in that** the electromagnetic transmitting and receiving device (7) has a rubber covering (21), wherein the rubber covering (21) is in particular a component part of the electromagnetic transmitting and receiving device (7).

## Revendications

1. Pneumatique (1), le pneumatique (1) pouvant tourner sur un axe de rotation (2) dans un sens de rotation (3), ledit pneumatique comportant un empilage de ceintures de pneumatique (4) et un coussin d'épaulement (5), le coussin d'épaulement (5) étant disposé dans une zone d'épaule (6) du pneumatique (1), et comportant un dispositif d'émission et de réception électromagnétique (7), le dispositif d'émission et de réception électromagnétique (7) étant disposé dans la zone d'épaulement (6) de manière à être à une distance maximale (20) de 2 mm maximum du coussin d'épaulement (5), **caractérisé en ce que** le pneumatique (1) comporte un composant de paroi latérale (11), le composant de paroi latérale (11) étant disposé à côté du coussin d'épaulement (5) et le dispositif d'émission et de réception électromagnétique (7) étant disposé dans l'espace entre le coussin d'épaulement (5) et le composant de paroi latérale (11).

2. Pneumatique (I) selon la revendication 1, **caractérisé en ce que** le dispositif d'émission et de réception électromagnétique (7) est disposé dans la zone d'épaulement (6) de façon à être à une distance maximale (20) de 0,1 mm maximum à 2 mm maximum du coussin d'épaulement (5).

3. Pneumatique (1) selon la revendication 1, **caractérisé en ce que** le dispositif d'émission et de réception électromagnétique (7) est disposé dans la zone d'épaulement (6) de manière à être en contact direct avec le coussin d'épaulement (5).

4. Pneumatique (1) selon la revendication 1, **caractérisé en ce que** le dispositif d'émission et de réception électromagnétique (7) est disposé entièrement à l'intérieur du coussin d'épaulement (5).

5. Pneumatique (1) selon la revendication 1, **caractérisé en ce que** le pneumatique (1) comporte une bande de roulement (12), la bande de roulement (12) étant disposée à côté du coussin d'épaulement (5) et le dispositif d'émission et de réception électromagnétique (7) étant disposé spatialement entre le coussin d'épaulement (5) et la bande de roulement (12).

6. Pneumatique (1) selon l'une des revendications précédentes, **caractérisé en ce que** l'empilage de ceintures de pneumatique (4) comporte un point d'extrémité axial (8), le point d'extrémité axial (8) partant d'un plan médian de pneumatique (9) dans une direction (10), la direction (10) étant parallèle à l'axe de rotation (2) qui est le point de l'empilage de ceintures de pneumatique (4) qui est le plus éloigné du plan médian de pneumatique (9), et le coussin d'épaulement (5) comportant un premier point de surface (14) qui, de tous les points de surface du coussin d'épaulement (5), est le plus proche de l'axe de rotation (2) dans une direction radiale (15), une distance radiale (16) d'un premier point de surface (17) du dispositif d'émission et de réception électromagnétique (7), qui est le plus proche de l'axe de rotation (2) dans la direction radiale (15), à l'axe de rotation (2) étant supérieure d'au moins 3 mm à une distance radiale (18) du premier point de surface (14) du coussin d'épaulement (5) à l'axe de rotation (2), et une distance radiale (19) du point d'extrémité axial (8) à l'axe de rotation (2) étant supérieure d'au moins 3 mm à la distance radiale (16) du premier point de surface (17) du dispositif d'émission et de réception électromagnétique (7) à l'axe de rotation (2).

7. Pneumatique (1) selon l'une des revendications précédentes, **caractérisé en ce que** le dispositif d'émission et de réception électromagnétique (7) comporte une enveloppe en caoutchouc (21), l'enveloppe en caoutchouc (21) faisant notamment partie du dispositif d'émission et de réception électromagnétique (7) .
